(19) **Europäisches Patentamt / European Patent Office / Office européen des brevets**

(11) **EP 3 484 636 B1**

(12) **FASCICULE DE BREVET EUROPEEN**

(45) Date de publication et mention de la délivrance du brevet:
**15.07.2020 Bulletin 2020/29**

(21) Numéro de dépôt: **17730861.6**

(22) Date de dépôt: **19.05.2017**

(51) Int Cl.:
**B07C 1/16** *(2006.01)*

(86) Numéro de dépôt international:
**PCT/FR2017/051236**

(87) Numéro de publication internationale:
**WO 2018/011479 (18.01.2018 Gazette 2018/03)**

(54) **DISPOSITIF POUR MESURER LA RIGIDITE D'ARTICLES DE COURRIER**

VORRICHTUNG ZUM MESSEN DER STEIFIGKEIT VON POSTSENDUNGEN

DEVICE FOR MEASURING THE STIFFNESS OF POSTAL ARTICLES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.07.2016 FR 1656684**

(43) Date de publication de la demande:
**22.05.2019 Bulletin 2019/21**

(73) Titulaire: **Solystic**
**92220 Bagneux (FR)**

(72) Inventeurs:
 • **EL BERNOUSSI, Hicham**
 **75015 Paris (FR)**
 • **LA PAGLIA, Anthony**
 **26120 Montelier (FR)**
 • **TELUOB, Jean-Marc**
 **07130 Cornas (FR)**
 • **REBOUL, Jean-Michel**
 **26260 Saint Donat (FR)**
 • **EYRAUD, Fabrice**
 **26800 Portes Les Valence (FR)**

(74) Mandataire: **Prugneau, Philippe**
**Cabinet Prugneau-Schaub**
**3 avenue Doyen Louis Weil**
**Le Grenat - EUROPOLE**
**38000 Grenoble (FR)**

(56) Documents cités:
**WO-A1-2004/030835     DE-A1- 1 574 165**
**US-A- 6 032 517**

**Description**

<u>Domaine technique</u>

L'invention concerne un dispositif de mesure pour mesurer la rigidité d'articles plats et en particulier d'article de courrier comprenant une portion de convoyage des articles dans laquelle les articles sont convoyés en série sur chant et un capteur de rigidité fonctionnant sur le principe de la mesure de la flèche d'une poutre en flexion qui est disposé le long de cette portion de convoyage pour mesurer sans contact la rigidité de chaque article.

L'invention s'étend à une machine de tri postal comprenant un tel dispositif pour mesurer la rigidité d'articles de courrier.

<u>Technique antérieure</u>

On connait du document de brevet US 6,032,517 une machine de tri postal comprenant un dispositif de mesure pour mesurer la rigidité d'articles de courrier convoyés en série sur chant dans un convoyeur de tri.

La mesure de rigidité est ici effectuée dans une portion courbe du convoyeur de tri, lequel convoyeur est à un convoyeur à bandes de pincement.

Le dispositif de mesure de rigidité fonctionne sur le principe de la mesure de la flèche d'une poutre en flexion.

Il comprend notamment un premier capteur disposé dans un segment droit du convoyeur en amont de la portion courbe pour effectuer une première mesure qui correspond à une mesure d'épaisseur de l'article et un second capteur disposé dans la portion courbe du convoyeur pour effectuer une seconde mesure qui correspond à une mesure d'épaisseur prenant en compte l'étirement des bandes du convoyeur provoqué par le passage de cet article dans la portion courbe.

Les articles les plus rigides provoquent un fort étirement des bandes dans la portion courbe tandis que les articles les plus souples ne provoquent pas d'étirement des bandes dans la portion courbe.

La différence entre les deux mesures en amont de la portion courbe et dans la portion courbe sert de grandeur représentative de la rigidité pour l'article qui traverse cette portion courbe.

Ce dispositif de mesure connu n'est pas adapté à un large spectre de courrier allant de la lettre simple à des articles de courrier plats de grand format comme les catalogues ou magazines à reliure épaisse.

En effet, si le rayon de courbure dans la portion courbe du convoyeur est relativement faible pour des questions de compacité de l'installation de tri, cela peut entraîner des forces de déformation des bandes de convoyage par étirement très importantes qui conduisent à l'endommagement des articles de courrier sous l'effet d'un serrage excessif.

Par ailleurs, ce dispositif de mesure n'est pas adapté pour différencier des articles de courrier globalement très rigides comme un catalogue à reliure épaisse avec des articles de courrier ayant une rigidité relative car contenant par exemple un objet très rigide à l'intérieur, comme un stylo ou une plaque métallique comme une clé. Ces articles de courrier sont les plus susceptibles d'entraîner des bourrages dans le convoyeur d'une machine de tri postal.

On connait également du document WO2004/030835 un dispositif de mesure pour mesurer la rigidité d'articles de courrier plats. Cependant, ce dispositif ne permet pas de réaliser des mesures dans une large gamme d'articles de courrier à rigidité hétérogène.

<u>Exposé de l'invention</u>

Le but de l'invention est donc de proposer un dispositif de mesure adapté pour mesurer la rigidité d'articles très hétérogènes (comme du courrier mélangé) allant par exemple du pli classique à des articles de courrier plats grand format comme les catalogues et magazines et aussi les articles de courrier avec enveloppe contenant des objets rigides à l'intérieur.

A cet effet, l'invention a pour objet un dispositif pour mesurer la rigidité d'articles de courrier comprenant une portion de convoyage rectiligne des articles dans laquelle les articles sont convoyés en série sur chant et un capteur de rigidité fonctionnant sur le principe de la mesure de la flèche d'une poutre en flexion qui est disposé le long de cette portion de convoyage pour mesurer sans contact la rigidité de chaque article, un galet de déflexion de la portion de convoyage étant disposé en quinconce entre deux roues à jante déformable de telle manière à former une crête sensiblement triangulaire sur la portion de convoyage, caractérisé en ce qu'une rampe d'entrée est disposée en amont de ladite crête suivant le sens de convoyage des articles pour faire suivre sans obstacle la pente montante de la crête aux articles.

L'idée à la base de l'invention est ici d'imposer aux articles une déviation faible et maîtrisée dans une portion rectiligne de convoyage pour effectuer la mesure de rigidité selon le principe de la mesure de la flèche d'une poutre en flexion.

Avec la rampe en amont de la crête, les articles sont amenés sur une trajectoire tangentielle au galet. On supprime ainsi l'obstacle formé par le galet dans le trajet rectiligne de convoyage et donc on évite que les articles viennent buter sur ce galet et causer des chocs importants.

Les roues à jante déformable sont bien adaptées au transport à vitesse constante d'articles hétérogènes présentant des fortes variations d'épaisseur. Ce convoyeur à roues à jante déformable engendre peu de vibrations ce qui contribue à l'obtention d'une mesure de rigidité de qualité. Chaque roue à jante déformable peut être une roue motrice tandis que le galet de déflexion peut être un galet fou.

Le dispositif de mesure selon l'invention peut avantageusement présenter les particularités suivantes :

- une rampe de sortie peut être disposée en aval de ladite crête suivant le sens de convoyage des articles, cette rampe suivant la pente descendante de la crête, ce qui permet d'éviter au front arrière d'un article rigide en sortie de la crête de venir battre le galet de déflexion et perturber la mesure de rigidité.
- la rampe d'entrée peut s'étendre en amont suivant le sens de convoyage au-delà d'un point de pincement entre une roue et ladite rampe d'entrée pour former une zone de dégagement de l'arrière des articles, ce qui permet à des articles très rigides de s'orienter sans choc à plat sur la rampe d'entrée.

- la pente montante de ladite rampe d'entrée peut être inférieure ou égale à 10° ce qui fait que la crête de déflexion sur la portion rectiligne du convoyage est faible pour préserver le plus possible l'intégrité des articles convoyés dans le convoyeur du dispositif de mesure.
- le capteur peut avantageusement être un capteur multiple apte à effectuer des mesures multiples de rigidité en plusieurs points répartis sur la hauteur de l'article sur chant.
- il peut comprendre une unité de traitement de données qui évalue à partir de mesures multiples de rigidité respectivement en pied d'article et en haut d'article si l'article est assez souple ou si l'article est trop rigide.
- l'évaluation peut être basée sur une combinaison linéaire de valeurs de flèche.
- l'évaluation peut être basée sur une estimation statistique de la valeur de flèche à partir d'une base de référence réalisée par un apprentissage hors ligne. La base d'apprentissage est enrichie de façon dynamique en exploitation.

Ce dispositif de mesure de rigidité peut s'installer dans la partie rectiligne d'un convoyeur de tri d'une machine de tri postal, de préférence en amont du convoyeur pour dériver une décision de trier l'article qui arrive en entrée dans le convoyeur si cet article est assez souple ou de rejet si cet article est trop rigide, et ce avant que l'article soit dirigé vers une sortie de tri ou au contraire vers une sortie de rejet du convoyeur de tri.

Description sommaire des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :

- la figure 1 est une représentation très schématique d'une machine de tri postal vue de dessus et intégrant le dispositif de mesure de rigidité selon l'invention;
- la figure 2 est une représentation schématique plus détaillée du dispositif de mesure de rigidité selon l'invention vu de dessus;
- les figures 3a à 3e illustrent le dispositif de mesure de rigidité selon l'invention dans différentes phases de la mesure de rigidité;
- les figures 4a à 4d sont des graphiques qui illustrent des signaux de mesure de rigidité pour différents types d'articles.
- La figure 5 illustre un capteur multiple pour réaliser des mesures multiples de rigidité suivant la hauteur des articles;
- Les figures 6a à 6d illustrent des signaux de mesure de rigidité multiples suivant la hauteur des articles;
- La figure 7 est un schéma bloc qui illustre le traitement de données réalisé pour détecter des articles trop rigides.

Description des modes de réalisation

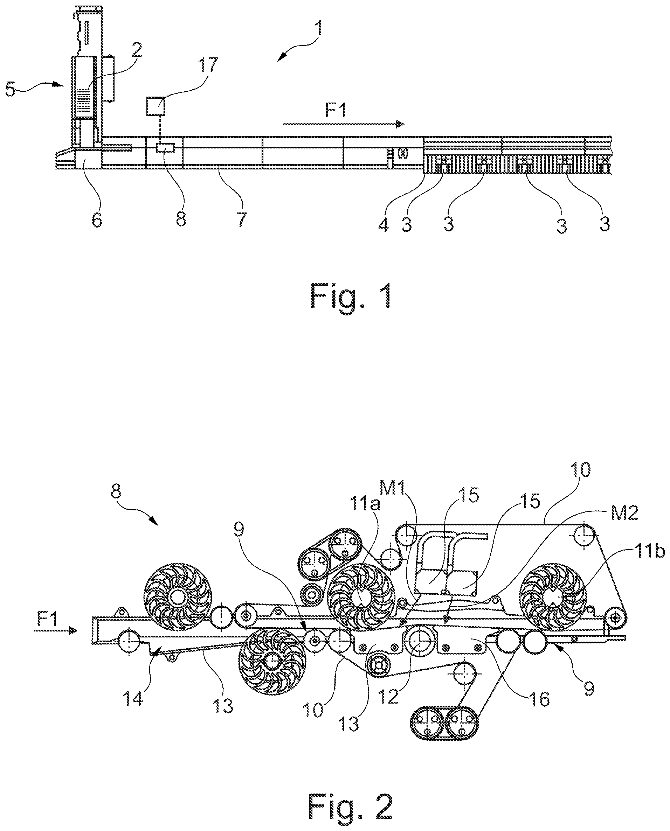

Sur la figure 1 on a illustré en partie une machine de tri postal 1 conçue pour trier des articles postaux plats désignés par la référence 2 qui peuvent être des articles de courrier très hétérogènes.

Ces articles de courrier peuvent être des plis très souples et flexibles, des catalogues souples mais à tranche rigide, des lettres souples mais contenant à l'intérieur des objets rigides (par exemple une clef ou un stylo), ou encore des articles plats grand format du type cartonnés ou renforcés avec une matière rigide, etc.

Sur la figure 1, on a représenté des sorties de tri 3 et une sortie de rejet 4 en amont des sorties de tri 3.

Les articles 2 sont disposés en pile sur chant dans le magasin 5 d'un dépileur 6 qui envoie en série sur chant les articles 2 dans le convoyeur de tri 7 qui les déplace vers les sorties 3 ou 4 suivant un sens de convoyage représenté par la flèche F1.

Sur la figure 1, on a représenté aussi un dispositif de mesure 8 pour mesurer la rigidité des articles 2.

Comme visible sur la figure 1, ce dispositif de mesure 8 est disposé dans une portion rectiligne du convoyeur de tri 7, ici en amont des sorties de tri 3 et de rejet 4. Le dispositif de mesure 8 est ici montré relié à une unité de traitement de données 17 qui est ici aussi l'unité de contrôle/commande de la machine de tri 1.

Comme visible plus en détail sur la figure 2, le dispositif de mesure 8 selon l'invention comprend une portion de convoyage 9 essentiellement rectiligne qui est formée par deux courroies de convoyage 10 parallèles aptes à déplacer par pincement les articles 2 sur chant suivant le sens F1.

Dans ce dispositif de mesure selon l'invention, un galet de déflexion 12 sur lequel est engagée une des bandes 10 est disposé en quinconce entre deux roues 11a et 11b à jante déformable sur lesquelles est engagée l'autre bande 10 de telle manière à créer une crête sensiblement triangulaire sur la portion de convoyage rectiligne formée par les bandes parallèles 10.

Les roues ont ici un moyeu à ailettes pour pouvoir absorber des articles 2 très hétérogènes avec une épaisseur pouvant aller de moins de un millimètre à quelques centimètres. Les roues 11a et 11b sont ici des roues libres entraînées en rotation par une courroie motrice et le galet de déflexion 12 est ici un galet fou rigide pour imposer la déflexion en forme de crête aux articles.

La distance entre les deux roues 11a, 11b à jante déformable est définie de sorte que le plus grand des articles 2 ne puisse pas être pincé par les deux roues en même temps.

Selon l'invention, une rampe d'entrée 13 est prévue en amont de la crête formée par le galet 12 suivant le sens de convoyage des articles, cette rampe suivant la pente montante de la crête qui peut être inférieure ou égale à 10°.

La rampe d'entrée 13 peut être en tôle ou en plastique dur. Elle peut s'étendre en amont suivant le sens de convoyage F1 au-delà d'un point de pincement entre la roue 11a et la rampe d'entrée 13 pour former une zone de dégagement 14 pour l'arrière des articles 2. De la sorte les articles même très rigides se présentent à plat sur la rampe 13 pour passer à plat la crête de la portion rectiligne de convoyage.

On a illustré sur la figure 2 deux capteurs 15 de part et d'autre de la crête.

En particulier, avec un premier capteur 15 on réalise une mesure indiquée par la flèche M1 de l'épaisseur d'un article 2 plaqué sur la pente montante de la crête tandis qu'avec l'autre capteur 15 on réalise une seconde mesure indiquée par la flèche M2 de l'épaisseur de l'article en tenant compte de la déformation des bandes 10 provoquée par l'article 2 en flexion sur le haut de la crête. Ces deux mesures M1 et M2 sont effectuées sans contact avec les articles et la différence entre ces deux mesures est représentative de la rigidité de l'article.

Les capteurs 15 peuvent être des capteurs optoélectroniques comme des capteurs laser à jauge de profondeur. Comme visible sur la figure 2, les capteurs 15 sont disposés sur un côté extérieur des bandes 10 et mesurent en fait une profondeur avec une des deux bandes qui est amenée à se déformer au passage d'un article sur la crête de déflexion. Cette mesure de profondeur est équivalente à une mesure d'épaisseur en amont de la crête de déflexion.

Une rampe de sortie 16 peut être disposée en aval de la crête suivant le sens de convoyage F1, cette rampe de sortie suivant la pente descendante de la crête. Sur la figure 2, on voit que les deux rampes 13 et 16 ont des pentes opposées par rapport au galet de déflexion 12.

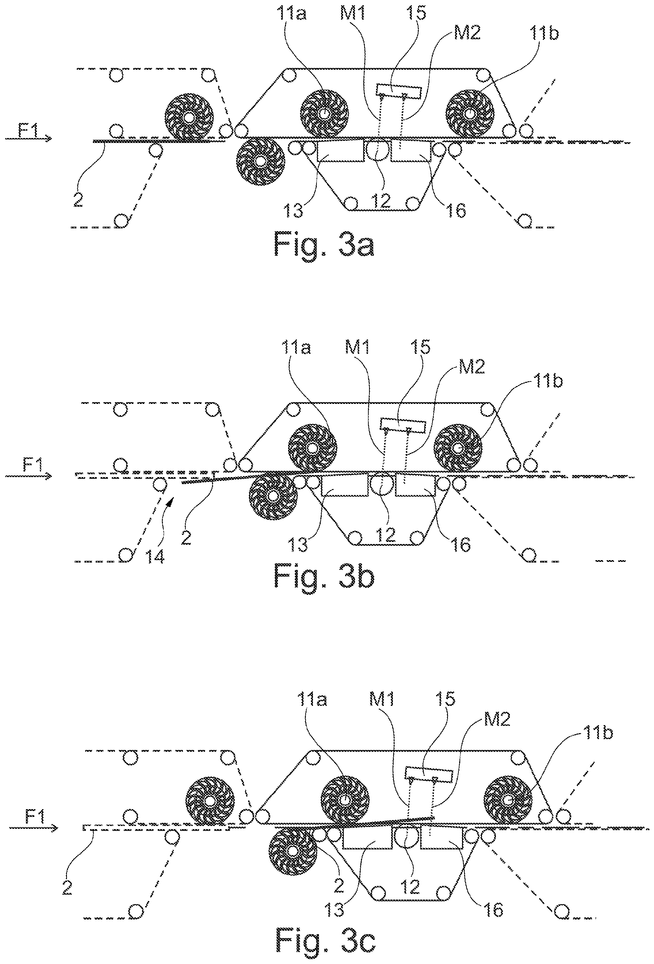

La figure 3a montre un article de courrier 2 en entrée du dispositif de mesure de rigidité 8 selon l'invention.

La figure 3b montre l'article de courrier 2 qui est pincé entre la rampe d'entrée 13 et la roue déformable 11a en amont du galet 12. L'arrière de l'article 2 s'étend à plat sans flexion dans la zone de dégagement 14.

La figure 3c montre l'article 2 en flexion sur le galet 12 et qui a son extrémité arrière pincée entre la roue 11a et la rampe 13.

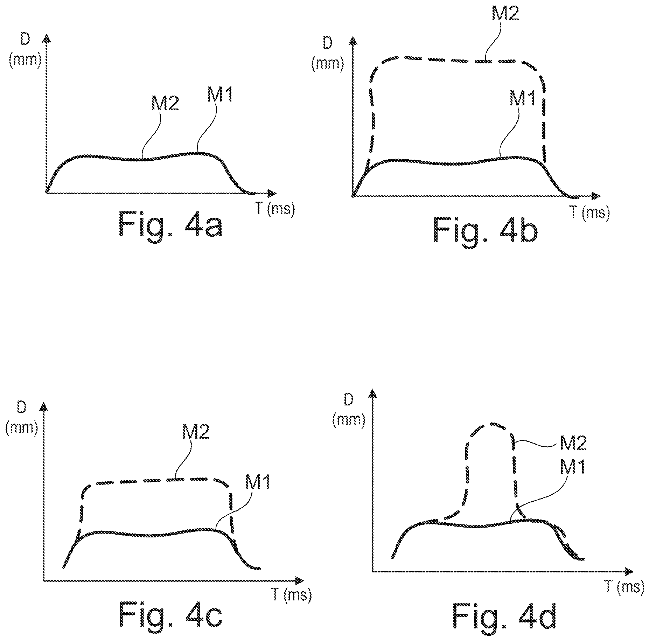

Les capteurs 15 font une mesure échantillonnée sur l'article 2 qui se déplace suivant le sens F1 pour dériver un profil de rigidité comme illustré sur les figures 4a à 4d.

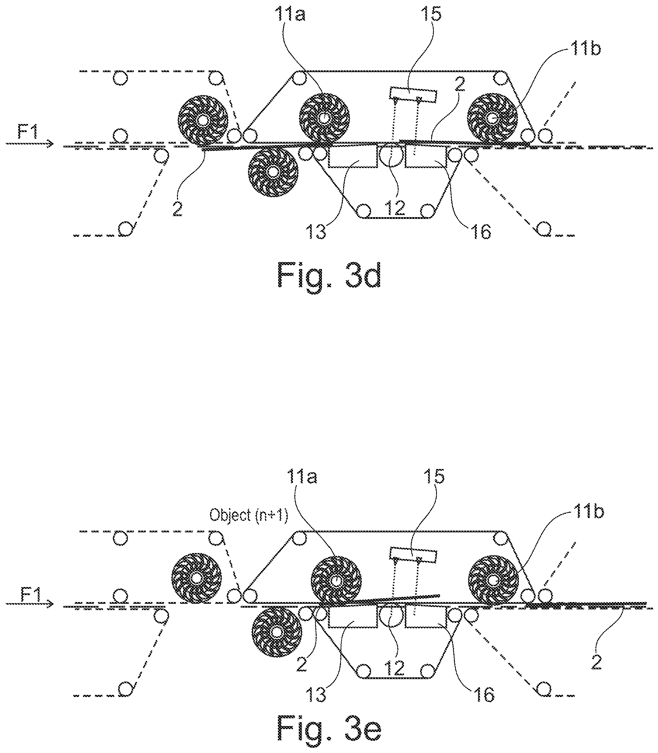

Dans la figure 3d, l'arrière de l'article 2 courant finit de franchir la crête et un autre article 2 se présente en entrée du dispositif de mesure.

Dans la figure 3e, l'article 2 courant sort du dispositif de mesure tandis que l'avant de l'autre article 2 est en flexion sur la crête.

L'unité de contrôle/commande 17 est ici conçue pour établir un profil de rigidité pour chaque article 2.

La figure 4a illustre un profil de rigidité pour un article de courrier souple et homogène comme une lettre. Le profil de rigidité est établi ici dans un repère avec un axe de temps d'échantillonnage T et un axe de mesure d'épaisseur D. Sur la figure 4a, les signaux de mesure échantillonnés M1, M2 obtenus avec les deux capteurs 15 sont ici des signaux en plateau confondus et l'épaisseur D mesurée est invariante en amont et en aval de la crête.

Sur la figure 4b, le profil de rigidité est celui d'un article de courrier très rigide et homogène comme une lettre épaisse ou un magazine. Le signal de mesure en amont de la crête M1 est différent de celui M2 en aval de la crête. Les deux signaux de mesure sont en plateau et sont très écartés l'un de l'autre sur l'axe D.

Sur la figure 4c, le profil de rigidité est celui d'un article de courrier de type catalogue souple à tranche rigide. Les signaux de mesure M1 et M2 sont différents et ressemblent à ceux représentés sur la figure 4b mais ils sont moins écartés sur l'axe D.

Sur la figure 4d, le profil de rigidité est particulier à celui d'un pli souple contenant un objet rigide à l'intérieur comme une clef ou un stylo. Les signaux de mesure M1 et M2 sont différents, le signal de mesure M1 est à plateau tandis que le signal de mesure M2 comporte un pic en forme de cloche.

On voit que ces profils de rigidité sont assez distinctifs les uns des autres et l'unité 17 peut être agencée pour détecter sur la base des signaux de rigidité illustrés sur les figures 4a et à 4d si un article de courrier peut être dirigé vers une sortie de tri 3 (profils de rigidité des figures 4a et 4d) ou au contraire si cet article de courrier doit être dirigé vers la sortie de rejet 4 (profil de rigidité des figures 4b et 4c).

Cette détection peut être affinée en produisant des profils de rigidité à différentes hauteurs sur les articles 2.

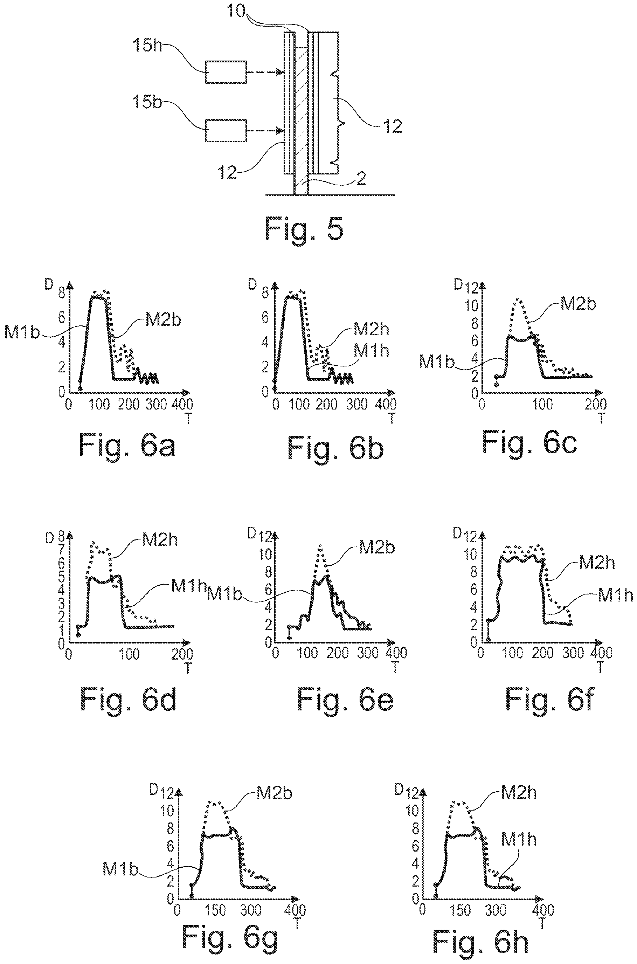

La figure 5 illustre en coupe transversale un article 2 sur chant pincé entre les bandes de convoyage 10 et ici deux capteurs 15h et 15b en superposition pour faire une mesure d'épaisseur respectivement dans le bas de l'article 2 sur chant, par exemple à 22 mm du pied de l'article, et dans le haut de l'article 2, par exemple à 60 mm du pied de l'article.

On peut prévoir plus de deux capteurs superposés sur différents niveaux de hauteur de l'article 2 sur chant.

Avec ces mesures multiples, on peut mieux identifier des articles de courrier sous enveloppe contenant un objet rigide à l'intérieur, par exemple un stylo dans le fond de l'enveloppe. On sait que ce type d'articles de courrier rigides a tendance à provoquer des bourrages dans les machines de tri automatique du courrier et il est donc important de pouvoir les discriminer sans erreur.

Un objet rigide métallique ou non inséré dans une enveloppe aura tendance à se placer par gravité dans le bas de l'enveloppe (à proximité du pied du courrier) et donc il en résultera que la rigidité de cet article sera plus importante en bas du courrier qu'en haut du courrier.

Les figures 6a à 6d illustrent différents signaux de mesure réalisés à deux niveaux de hauteur sur un article de courrier sous enveloppe contenant un objet rigide comme un stylo, par exemple à 22mm de hauteur pour les signaux M1b et M2b et à 60 mm de hauteur pour les signaux M1h et M2h.

Les figures 6a et 6b illustrent le profil de rigidité d'un pli souple avec des mesures d'épaisseur prises en bas et en haut du pli.

Les figures 6c et 6d illustrent le profil de rigidité d'un pli rigide qui peut être dirigé vers une sortie de tri 3.

Les figures 6e et 6f illustrent le profil de rigidité d'un courrier sous enveloppe avec un objet rigide à l'intérieur et qui peut être dirigé vers une sortie de tri 3 car la longueur de rigidité est faible.

Les figures 6g et 6h illustrent le profil de rigidité d'un pli très rigide avec une rigidité homogène sur toute la hauteur du pli et aussi sur toute la longueur du pli. Ce pli sera dirigé vers la sortie de rejet 4.

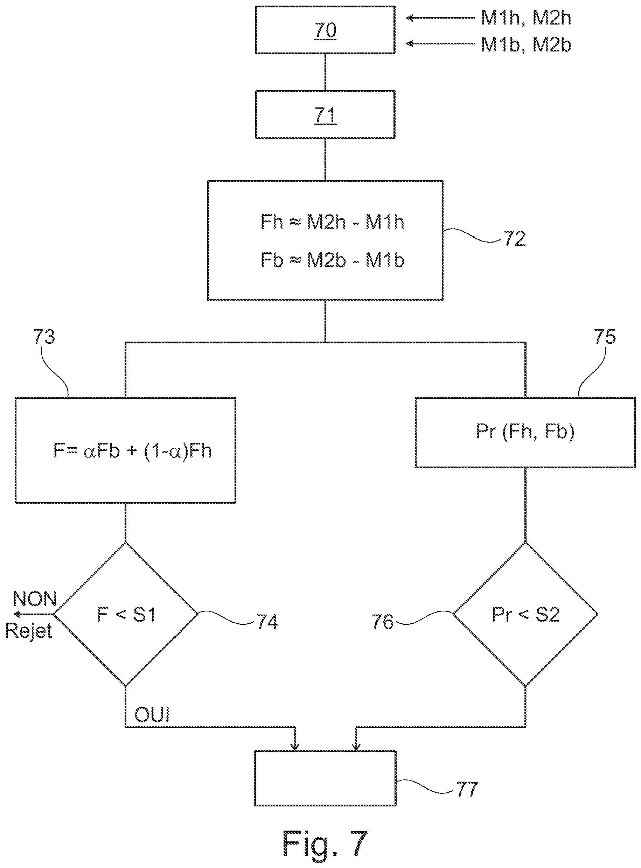

La figure 7 est un organigramme qui illustre un processus de traitement des signaux multiples du profil de rigidité M1h, M2h, M1b, M2b.

A l'étape 70, les signaux multiples de profil de rigidité M1b, M2b, M1h, M2h sont capturés par des capteurs 15b et 15h en amont et en aval de la crête sur la portion de convoyage dans le dispositif de mesure selon l'invention et sont fournis à l'unité 17 de traitement de données.

A l'étape 71, l'unité 17 réalise un filtrage sur ces signaux pour les lisser.

A l'étape 72, l'unité 17 calcule les flèches (valeur de déformation maximale) en haut et en bas pour l'article 2 selon les relations suivantes :

$$\texttt{Fh= M2h - M1h}$$

$$\texttt{Fb= M2b - M1b}$$

A l'étape 73, l'unité 17 combine les deux valeurs de flèche en haut et en bas de l'article pour dériver une valeur de rigidité composite F suivant la relation suivante:

$$\texttt{F=}\alpha\texttt{Fb + (1-}\alpha\texttt{)Fh}$$

où la valeur du coefficient $\alpha$ est choisie de manière à traduire qu'une rigidité forte en haut de l'article (ici à 60 mm de hauteur) provoque plus de bourrage qu'une rigidité forte au pied de l'article.

A l'étape 74, la valeur de rigidité F est comparée à un seuil réglable SI qui peut être ajusté en fonction des caractéristiques physiques de longueur et de largeur des articles qui vont circuler dans la machine de tri par exemple. Si la valeur F est inférieure à S1, l'article peut être considéré comme assez souple et l'unité 17 dirige cet article vers une sortie de tri 3. Si la valeur F est supérieure à S1, l'unité 7 dirige l'article 2 reconnu comme trop rigide vers la sortie de rejet 4.

En alternative à l'étape 73, l'unité 17 dans l'étape 75 calcule une valeur statistique de probabilité Pr à partir des profils de rigidité Fh et Fb, cette valeur statistique de probabilité Pr étant représentative de la probabilité que l'article est un pli rigide ou un pli souple sur la base des relations suivantes :

```
Pr(Fh,Fb)= nombre d'articles dans une base de
référence qui sont reconnus rigides avec le profil de
rigidité (Fh,Fb) / nombre d'articles total dans la base
de référence avec le profil de rigidité (Fb,Fh).
```

Cette base de référence est construite dans une phase préalable d'apprentissage d'un réseau de neurones et elle est avantageusement augmentée de façon dynamique en exploitation du dispositif de mesure.

Dans l'étape 74, l'unité 17 compare la valeur de probabilité Pr à un seuil réglable S2 qui peut être ajusté en fonction des caractéristiques physiques de longueur et de largeur des articles qui vont circuler dans la machine de tri par exemple.

Si la valeur Pr est inférieure à S2, l'article peut être considéré comme trop rigide et l'unité 17 dirige cet article vers la sortie de rejet 4. Si la valeur F est inférieure à S1, l'unité 7 dirige l'article 2 reconnu comme assez souple vers la sortie de tri 3.

Les deux évaluations de rigidité dérivées en 73 et 75 peuvent être combinées dans l'étape 77 pour produire une décision encore plus précise dans l'unité 17 de diriger l'article vers une sortie de tri ou alors de le diriger vers la sortie de rejet.

Dans l'étape 75, la valeur statistique de probabilité peut être aussi déterminée selon une méthode fondée sur la régression logistique.

Il est entendu que le traitement illustré sur la figure 7 peut être réalisé avec plus de deux mesures d'épaisseur réparties sur la hauteur d'un article 2.

On peut par exemple réaliser une première mesure en bas du pied de l'article sur chant, une seconde mesure à mi-hauteur qui correspond à la hauteur à laquelle sont disposés les volets d'aiguillage dans les sorties de tri et une troisième mesure encore plus haut que la seconde mesure. Ces mesures multiples permettent d'obtenir des profils de rigidité qui sont très discriminant en fonction de la nature des articles de courrier.

**Revendications**

1. Dispositif de mesure (8) pour mesurer la rigidité d'articles plats (2) comprenant une portion de convoyage rectiligne des articles plats dans laquelle les articles plats sont convoyés en série sur chant et un capteur (15) de rigidité fonctionnant sur le principe de la mesure de la flèche d'une poutre en flexion qui est disposé le long de cette portion de convoyage pour mesurer sans contact la rigidité de chaque article plat, un galet (12) de déflexion de la portion de convoyage étant disposé en quinconce entre deux roues (11a, 11b) à jante déformable de telle manière à former une crête sensiblement triangulaire sur la portion (9) de convoyage, **caractérisé en ce qu'**une rampe d'entrée (13) est disposée en amont de ladite crête suivant le sens de convoyage (F1) des articles plats pour faire suivre sans obstacle la pente montante de la crête aux articles plats.

2. Dispositif de mesure (8) selon la revendication 1, **caractérisé en ce qu'**il comprend une rampe (16) de sortie disposée en aval de ladite crête suivant le sens de convoyage des articles plats (2) qui suit la pente descendante de la crête.

3. Dispositif de mesure (8) selon l'une des revendications précédentes, **caractérisé en ce que** la rampe (13) d'entrée s'étend en amont suivant le sens de convoyage (F1) au-delà d'un point de pincement entre une roue (11a) et ladite rampe (13) d'entrée pour former une zone de dégagement (14) pour l'arrière des articles plats (2).

4. Dispositif de mesure (8) selon l'une des revendications précédentes, **caractérisé en ce que** la pente montante de ladite rampe (13) d'entrée est inférieure ou égale à 10°.

5. Dispositif selon l'une des revendications précédentes, **caractérisé en ce que** ledit capteur (15) est un capteur multiple (15h, 15b) apte à effectuer des mesures multiples de rigidité (M1b, M1h, M2b, M2h) en plusieurs points répartis sur la hauteur de l'article sur chant.

**6.** Dispositif selon la revendication 5, **caractérisé en ce qu'**il comprend une unité de traitement de données (17) qui évalue à partir de mesures multiples de rigidité respectivement en pied d'article et en haut d'article si l'article est assez souple ou si l'article est trop rigide.

**7.** Dispositif selon la revendication 6, **caractérisé en ce que** l'évaluation est basée sur une combinaison linéaire de valeurs de flèche.

**8.** dispositif selon la revendication 6, **caractérisé en ce que** l'évaluation est basée sur une estimation statistique de la valeur de flèche à partir d'une base de référence réalisée par un apprentissage hors ligne.

**9.** Dispositif selon la revendication 8, **caractérisé en ce que** la base de référence est augmentée de façon dynamique en exploitation.

**10.** Machine de tri postal (1), **caractérisée en ce qu'**elle comprend un convoyeur de tri (7) avec des sorties de tri (3) et une sortie de rejet (4) et une portion de convoyage en amont des sorties de tri et de la sortie de rejet dans laquelle est disposé le dispositif de mesure (8) selon l'une des revendications précédentes.

**Patentansprüche**

**1.** Messvorrichtung (8) zum Messen der Steifigkeit von flachen Gegenständen (2), umfassend einen geradlinigen Förderabschnitt der flachen Gegenstände, in dem die flachen Gegenstände seriell auf Kante gefördert werden, und einen nach dem Prinzip der Messung der Segmenthöhe eines gebogenen Balkens funktionierenden Steifigkeits-Sensor (15), der entlang des Förderabschnitts angeordnet ist, um berührungslos die Steifigkeit jedes flachen Gegenstands zu messen, wobei eine Ablenkungs-Rolle (12) des Förderabschnitts versetzt zwischen zwei Rädern (11a, 11b) mit deformierbarem Kranz derart angeordnet ist, dass eine im Wesentlichen dreieckige Spitze auf dem Förderabschnitt (9) gebildet ist, **dadurch gekennzeichnet, dass** der Spitze in Förderrichtung (F1) der flachen Gegenstände vorgelagert eine Einführrampe (13) angeordnet ist, um ein Folgen der flachen Gegenstände bezüglich der Steigung der Spitze ohne Hindernis zu veranlassen.

**2.** Messvorrichtung (8) nach Anspruch 1, **dadurch gekennzeichnet, dass** sie eine der Spitze in Förderrichtung der flachen Gegenstände (2) nachgelagerte Abführrampe (16) umfasst, die dem Gefälle der Spitze folgt.

**3.** Messvorrichtung (8) nach einem der vorhergehenden Ansprüche, **dadurch gekennzeichnet, dass** die Einführrampe (13) sich in Förderrichtung (F1) der flachen Gegenstände (2) vorgelagert jenseits eines Klemmpunktes zwischen einem Rad (11a) und der Einführrampe (13) erstreckt, um eine Entlastungszone (14) für das rückwärtige Ende der flachen Gegenstände (2) zu bilden.

**4.** Messvorrichtung (8) nach einem der vorhergehenden Ansprüche, **dadurch gekennzeichnet, dass** die Steigung der Einführrampe (13) kleiner oder gleich 10° ist.

**5.** Vorrichtung nach einem der vorhergehenden Ansprüche, **dadurch gekennzeichnet, dass** der Sensor (15) ein Mehrfachsensor (15h, 15b) ist, der in der Lage ist, mehrfache Steifigkeitsmessungen (M1b, M1h, M2b, M2h) in mehreren über die Höhe des auf Kante angeordneten Gegenstands verteilten Punkten auszuführen.

**6.** Vorrichtung nach Anspruch 5, **dadurch gekennzeichnet, dass** sie eine Datenverarbeitungseinheit (17) umfasst, die ausgehend von mehrfachen Messungen jeweils an einem unteren Ende eines Gegenstands und an einem oberen Ende eines Gegenstands evaluiert, ob der Gegenstand ausreichend nachgiebig ist oder ob der Gegenstand zu steif ist.

**7.** Vorrichtung nach Anspruch 6, **dadurch gekennzeichnet, dass** die Evaluation auf einer Linearkombination von Werten der Segmenthöhe gestützt ist.

**8.** Vorrichtung nach Anspruch 6, **dadurch gekennzeichnet, dass** die Evaluation auf einer statistischen Abschätzung des Wertes der Segmenthöhe ausgehend von einer Referenz-Basis gestützt ist, die bei einem Anlernvorgang offline erstellt wurde.

**9.** Vorrichtung nach Anspruch 8, **dadurch gekennzeichnet, dass** die Referenz-Basis dynamisch im Betrieb vergrößert wird.

10. Postsortiermaschine (1), **dadurch gekennzeichnet, dass** sie einen Sortierförderer (7) mit Sortierausgängen (3) und einem Ausschussausgang (4) und einen den Sortierausgängen und dem Ausschussausgang vorgelagerten Förderabschnitt umfasst, in dem die Messvorrichtung (8) nach einem der vorhergehenden Ansprüche angeordnet ist.

**Claims**

1. Measurement apparatus (8) for measuring the stiffness of flat articles (2), which apparatus comprises a rectilinear conveying portion along which the flat articles are conveyed in series and on edge, and a stiffness sensor (15) operating on the principle of measuring deflection of a beam in bending, which sensor is disposed along said conveying portion for measuring in contactless manner the stiffness of each flat article, a deflection roller (12) being disposed in staggered offset manner between two wheels (11a, 11b) having deformable rims in such a manner as to form a substantially triangular peak on the conveying portion (9), said measurement apparatus being **characterized in that** an inlet ramp (13) is disposed upstream from said peak relative to the conveying direction (F1) in which the flat articles are conveyed so as to cause the flat articles to follow the upward slope of the peak without any obstacle.

2. A measurement device (8) according to claim 1, **characterized in that** it further comprises an outlet ramp (16) disposed downstream from said peak relative to the conveying direction of the flat articles (2), which ramp follows the downward slope of the peak.

3. Measurement apparatus (8) according to any preceding claim, **characterized in that** the inlet ramp (13) extends upstream relative to the conveying direction (F1) beyond a pinch point between a wheel (11a) and said inlet ramp (13) so as to form a disengagement zone (14) for the rear ends of the flat articles (2).

4. Measurement apparatus (8) according to any preceding claim, **characterized in that** the upward slope of said inlet ramp (13) is less than or equal to 10°.

5. Apparatus according to any preceding claim, **characterized in that** said sensor (15) is a multiple sensor (15h, 15b) suitable for performing multiple stiffness measurements (M1b, M1h, M2b, M2h) at a plurality of points distributed over the height of the mailpiece on edge.

6. Apparatus according to claim 5, **characterized in that** it further comprises a data processor unit (17) that, on the basis of multiple stiffness measurements respectively at the foot of the article and at the top of the article, evaluates whether the article is flexible enough or whether it is too stiff.

7. Apparatus according to claim 6, **characterized in that** the evaluation is based on a linear combination of deflection values.

8. Apparatus according to claim 6, **characterized in that** the evaluation is based on a statistical estimation of the deflection value on the basis of a reference database produced by off-line learning.

9. Apparatus according to claim 8, **characterized in that** the reference database is increased dynamically during use.

10. A postal sorting machine (1), **characterized in that** it comprises a sorting conveyor (7) with sorting outlets (3) and a reject outlet (4), and a conveying portion upstream from the sorting outlets and from the reject outlet in which the measurement apparatus (8) according to any preceding claim is disposed.

Fig. 1

Fig. 2

Fig. 3a

Fig. 3b

Fig. 3c

11a    15    11b

F1

2    13    12    16

Fig. 3d

11a    15    11b

Object (n+1)

F1

2    13    12    16    2

Fig. 3e

Fig. 4a

Fig. 4b

Fig. 4c

Fig. 4d

Fig. 5

Fig. 6a

Fig. 6b

Fig. 6c

Fig. 6d

Fig. 6e

Fig. 6f

Fig. 6g

Fig. 6h

```
         ┌──────────────┐  ←──── M1h, M2h
         │      70      │  ←──── M1b, M2b
         └──────────────┘

         ┌──────────────┐
         │      71      │
         └──────────────┘

    ┌──────────────────────────┐
    │   Fh ≈ M2h - M1h         │ ── 72
    │   Fb ≈ M2b - M1b         │
    └──────────────────────────┘
```

73

$$F = \alpha Fb + (1-\alpha)Fh$$

75

$$Pr(Fh, Fb)$$

NON
Rejet

$F < S1$ — 74

OUI

76 — $Pr < S2$

77

## Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6032517 A

- WO 2004030835 A